(19) Europäisches Patentamt
European Patent Office
Office européen des brevets

(11) Publication number: 0 274 121
A2

# (12) EUROPEAN PATENT APPLICATION

(21) Application number: 87119195.3

(51) Int. Cl.[4]: C08G 73/10

(22) Date of filing: 24.12.87

(30) Priority: 31.12.86 US 948087

(43) Date of publication of application:
13.07.88 Bulletin 88/28

(84) Designated Contracting States:
DE FR GB IT NL

(71) Applicant: GENERAL ELECTRIC COMPANY
1 River Road
Schenectady New York 12305(US)

(72) Inventor: Peters, Edward Norman
51 West Street
Lenox Massachusetts 01240(US)
Inventor: Bookbinder, Dana Craig
75, Pomeroy Avenue
Pittsfield Massachusetts 01201(US)
Inventor: Hawkins, Alicia Claire
2237 L Wrightsville Avenue
Wilmington North Carolina 28403(US)
Inventor: Fox, Daniel Wayne
193 Dawes Avenue
Pittsfield Massachusetts 01201(US)

(74) Representative: Schüler, Horst, Dr. et al
Kaiserstrasse 69
D-6000 Frankfurt/Main 1(DE)

## (54) Process for making polyimides.

(57) A process for making polyimides involves the steps of reacting an aromatic dianhydride with a lower aliphatic alcohol to form a diester diacid, combining the diester diacid with an organic diamine to form an ester-ammonium carboxylate salt, then heating the ester-ammonium carboxylate salt under imidization conditions to form the desired polyimide. The invention also relates to novel diester diacids used as intermediates in the foregoing process.

EP 0 274 121 A2

# PROCESS FOR MAKING POLYIMIDES

## Background of the Invention

The present invention relates to a process for making polyimides, and in particular to a process for making polyetherimides. In a further aspect, the invention relates to novel monomers that are useful for the preparation of polyimides.

The polyimides which are produced by the process of this invention are high performance engineering thermoplastics. These polymers are characterized by superior physical and chemical properties, such as high heat resistance, high impact and flexural strengths, and excellent processibility. Many of these polymers possess the physical characteristics of thermoset resins, yet can be molded conveniently by injection molding techniques.

Several processes for making polyimides are known. Typically, these polymers are prepared by reacting an organic diamine with an aromatic dianhydride. Two processes which have been of particular interest are the "melt polymerization" process and the "solution polymerization" process. The melt polymerization process has been described in several United States patents, repesentative of which is U.S. Patent 3,803,805 by T. Takekoshi and J. Kochanowski. This process involves combining an aromatic bis-(ether anhydride) and an organic diamine and heating the mixture under an inert atmosphere to form a homogeneous melt. Water formed during the polymerization reaction is removed at a temperature of up to 350°C. In a preferred embodiment of the process, the final stage of the reaction is conducted under reduced pressure to facilitate removal of water. The melt polymerization procedure has been improved by employing certain catalysts to enhance yields or reaction rates. (For example, see Takekoshi et al., U.S. patent 3,833,544, Williams et al., U.S. patent 3,998,840 and Takekoshi, U.S. patent 4,324,822.) The melt polymerization process has been adapted to the continuous mode by conducting the reaction in extrusion apparatus, as described, for example, by Takekoshi et al., U.S. patent 4,011,198 and Banucci, et al., U.S. patent 4,073,773.

Solution polymerization is generally conducted by reacting an aromatic dianhydride and an organic diamine in an inert solvent at temperatures up to about 200°C. In this procedure, water evolved during the reaction may be removed by azeotropic distillation. The resulting polymer is generally recovered by mixing the reaction solution with a precipitant, such as methanol. The reaction solvents employed for solution polymerization are selected for their solvent properties and their compatibility with the reactants and products. High-boiling, non-polar, organic solvents are preferred. (E.g., see Takekoshi et al., U.S. patent 3,991,004.) Dipolar, aprotic solvents and phenolic solvents can also be used, particularly when an aromatic bis(ether dicarboxylic acid) is used in place of the dianhydride as the starting material. (E.g., see Takekoshi et al., U.S. patent 3,905,942.)

D. Heath and J. Wirth (U.S. patent 3,847,867) disclose a method for preparing polyetherimides which involves stirring a solution of an aromatic bis(ether anhydride) and an organic diamine in a dipolar, aprotic solvent under ambient conditions to produce a polyamide acid, casting the polyamide acid solution on a substrate to facilitate the removal of organic solvent, and then heating the substrate in a stepwise manner to 200-300°C. to complete the conversion of the polyamide acid to the polyetherimide.

S. L. Parekh (U.S. Patent 4,417,044) discloses a process for making polyetherimides which involves reacting an aromatic bis(ether anhydride) with an organic diamine in an inert solvent to form a prepolymer solution, forming a thin film of the prepolymer solution to evaporate the solvent, and then heating the prepolymer to a temperature above the glass transition temperature of the final product to form the desired polyetherimide.

The use of the foregoing procedures for the preparation of certain high performance polymers has sometimes met with certain disadvantages. There is an increasing interest in developing injection moldable polyimides suitable for very high-temperature applications and having increased chemical resistance, as compared to the polyetherimides described in the above-cited patents. In general, these polyimides are crystalline or semi-crystalline homopolymers or copolymers prepared from aromatic dianhydrides and diamines containing rigid, linear monocyclic or polycyclic aromatic groups.

The foregoing melt polymerization procedures are attended by the disadvantages of complexity of operation, relatively high equipment costs and thermal limitations. Accordingly, a need exists for a simple procedure for preparing high performance polyimides which can be conducted in low-cost conventional equipment.

Summary of the Invention

In accordance with the present invention, a novel process for making polyimides involves the steps of:

(a) reacting an aromatic dianhydride with a molar excess of a lower aliphatic alcohol under ester-forming conditions to form a diester-diacid;

(b) combining the diester-diacid with an organic diamine to form an ester-ammonium carboxylate salt;

(c) isolating the ester-ammonium carboxylate salt as a solid; and

(d) heating the ester-ammonium carboxylate salt under polyimide-forming conditions to form the polyimide.

Detailed Description of the Invention

The polyimides prepared by the process of this invention may be depicted by the formula,

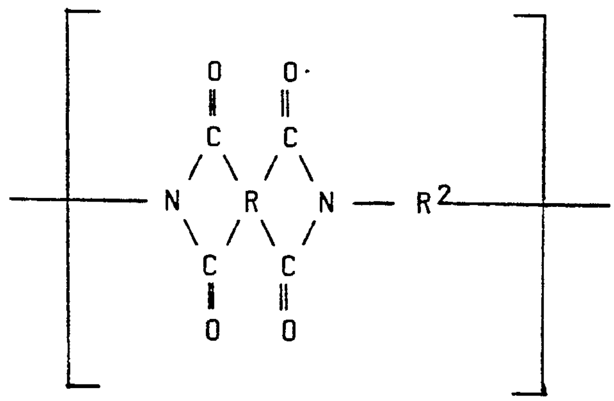

wherein R and $R^2$ are as hereinafter defined. The first step in the present process involves reacting an aromatic dianhydride of the formula

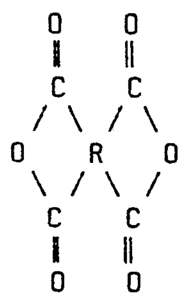

with a molar excess of a lower aliphatic alcohol of the formula,

$R^1$-OH

under ester-forming conditions to form a diester-diacid of the formula

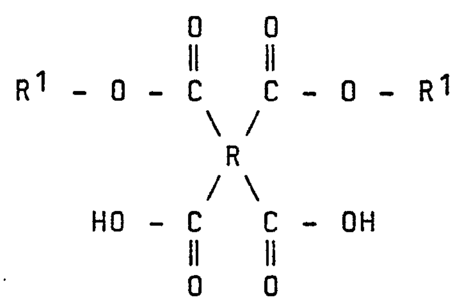

wherein R is a tetravalent aromatic radical selected from the group consisting of

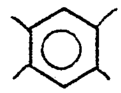 ,

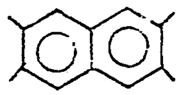 , 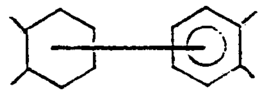 , and

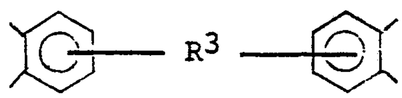

wherein $R^3$ is a member selected from the group consisting of -O-, -S-, -CO-, $-SO_2-$, $C_{(1-5)}$alkylene and halogenated derivatives thereof, including perfluoroalkylene groups and divalent radicals of the formula -O-Z-O-, wherein Z is a member selected from the group consisting of (A) divalent organic radicals of the formula:

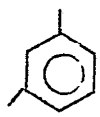 , 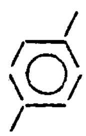 , 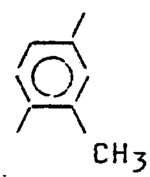 ,

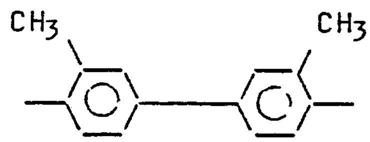 , 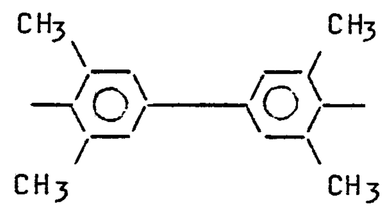

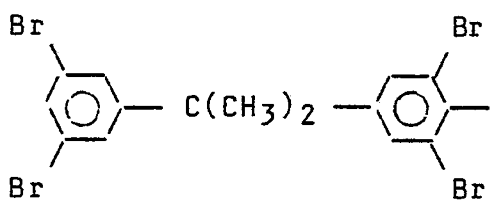 , 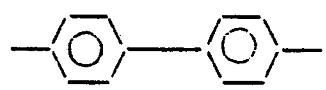

and 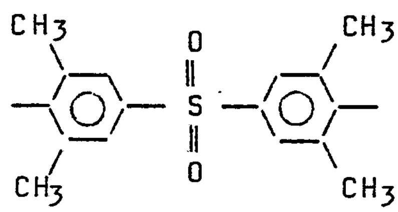

and (B) divalent org -ic radicals of the general formula

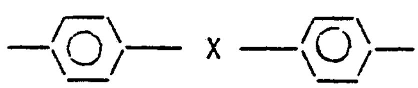

where X is a member selected from the group consisting of -O-, -S-, -CO-, $-SO_2-$, and $C_{(1-5)}$alkylene and

halogenated derivatives thereof, including perfluoroalkylene groups; and $R^1$ is a lower alkyl group of from 1 to about 10 carbon atoms.

The reaction of the aromatic dianhydride with the lower aliphatic alcohol is conducted in solution. The solvent used for the reaction may be the lower aliphatic alcohol itself or any aprotic organic solvent which does not interfere with reaction of the dianhydride and the lower aliphatic alcohol. Examples of such solvents include chloroform, methylene chloride, benzene, toluene, xylene, hexane, heptane, octane, tetrahydrofuran, and the like. Numerous other solvents will occur to skilled organic chemists. The organic solvent is preferably substantially anhydrous to facilitate separation of the ester-ammonium carboxylate salt produced in the succeeding reaction step. Preferably, the solvent for the esterification reaction is the lower aliphatic alcohol used in that reaction. For example, if $R^1$ is methyl, the preferred reaction solvent is methanol.

The lower aliphatic alcohol is employed in the reaction in a molar excess, relative to the amount of the aromatic dianhydride. The molar ratio of lower aliphatic alcohol to aromatic dianhydride advantageously is at least about 2:1, and preferably is in excess of about 5:1. Substantially higher molar ratios of aliphatic alcohol to dianhydride may be employed, such as when the lower aliphatic alcohol serves the additional function of solvent for the reaction.

Prior to reacting the lower aliphatic alcohol with the aromatic dianhydride, the alcohol may advantageously be converted to the corresponding alkoxide by reacting it with an active metal such as metallic sodium, potassium, lithium, magnesium and the like. For example, methanol may be converted to sodium ethoxide, which in turn can be reacted with the aromatic dianhydride to form the diester-diacid.

The ester-forming conditions include reactant concentrations and a reaction temperature conducive to the formation of the diester-diacid. The reactant concentrations may vary over a fairly wide range, depending upon solubilities and the desired rate of reaction. In general, the initial concentration of the dianhydride in the reaction solvent ranges from about 1 gram per 100 milliliters of solvent to about 100 grams per 100 milliliters of solution, preferably from about 40 grams to about 80 grams per 100 milliliters of solvent. In general, elevated reaction temperatures are employed, and such temperatures are preferably high enough to maintain a convenient rate of reaction. Temperatures ranging from about 50° C. to about 250°C. may be employed, with preferred temperatures ranging from about 65°C. to about 150°C. A convenient means of controlling the reaction temperature is to conduct the reaction in refluxing solvent.

In some instances, the reactants or the diester-diacid product are subject to air oxidation. Therefore, it is preferred that the reaction be conducted under a blanket of inert gas, such as nitrogen, to minimize such oxidation.

The ester-forming reaction is allowed to proceed until substantially all of the dianhydride has been converted to the diester-diacid. Under normal reaction conditions, substantial conversion will have occurred within about five to ten hours or less.

If desired, a chain terminator may be employed to control the molecular weight of the final polymer. The chain terminator is advantageously added to the aromatic dianhydride-lower aliphatic alcohol mixture, such that the molar ratio of aromatic dianhydride to chain terminator ranges from about 15:1 to about 200:1, preferably from about 20:1 to about 100:1. The chain terminator is preferably a reactive aromatic monoanhydride such as phthalic anhydride.

The next reaction step involves combining the diester-diacid with an organic diamine of the formula

$H_2N\text{-}R^2\text{-}NH_2$

wherein $R^2$ is a divalent organic radical selected from the group consisting of (a) aromatic hydrocarbon radicals having from 6 to about 20 carbon atoms and halogenated derivatives thereof, (b) alkylene radicals having from 2 to about 20 carbon atoms, cycloalkylene radicals having from 3 to about 20 carbon atoms, (c) $C_{(2\text{-}8)}$ alkylene terminated polydiorganosiloxanes, and (d) divalent radicals of the general formula

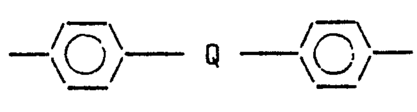

where Q is a member selected from the group consisting of -O-, -S-, -CO-, $-SO_2-$, $C_{(1\text{-}5)}$ alkylene. Particularly preferred organic diamines include m-phenylene diamine, p-phenylene diamine, and 1,3-di(p-aminophenoxy)benzene. The organic diamine reacts with the diester-diacid to form an ester ammonium carboxylate salt having repeating units of the formula

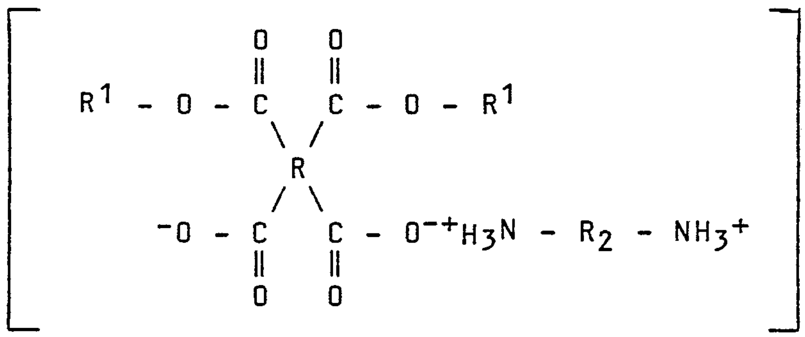

The reaction between the diester-diacid and the organic diamine is conducted in an organic solvent such as that employed for the reaction between the aromatic dianhydride and the lower aliphatic alcohol. It is preferred, though not essential, that the solvent be one in which the ester ammonium carboxylate salt is soluble. Such solvents are particularly preferred when a mixture of two or more aromatic dianhydrides is used in the first step of the process, thus preventing selective precipitation of different reaction products. It is preferred that the solution of the diester-diacid be at about room temperature or less prior to addition of the organic diamine. Such low temperatures reduce the possibility of loss of the reactants through volatilization and also maximize recovery of the ester-ammonium carboxylate salt by precipitation. The organic diamine is added to the diester-diacid in at least a stoichiometric amount (i.e., in at least about a 1:1 molar ratio). The organic diamine generally will be soluble in the solvent used as the reaction medium in the ester-forming reaction.

The ester-ammonium carboxylate salt may be recovered from the reaction solution by any convenient means, such as filtration or centrifugation. Alternatively, the solvent and other volatile components may be removed by evaporation or vacuum distillation, thus leaving the solid ester-ammonium carboxylate salt. The resulting solid may be dried prior to proceeding to the next step.

Recovering the ester-ammonium carboxylate salt by evaporation of the solvent is a particularly preferred procedure. This procedure results in recovery of the product in a particulate form which is convenient for subsequent handling and processing.

The solid ester-ammonium carboxylate salt may be converted to the desired polyimide by heating it under imidization conditions. Such conditions include a temperature sufficiently high to effect the imidization reaction. In general, the temperature ranges from about 150°C. to about 350°C. Preferrably the imidization reaction is conducted in the solid state. Thus, the solid ester-ammonium carboxylate salt is advantageously heated to temperature which is high enough to effect the imidization reaction yet which is below the glass transition temperature of the ester-ammonium carboxylate salt and the final polyimide product. By maintaining the imidization temperature below the glass transition temperatures, the particulate form of the ester-ammonium salt is maintained in the final product. This form of the product is particularly advantageous because it allows the product to be packaged in bags or drums and easily loaded into hoppers of extrusion and injection molding apparatus.

The imidization conditions also preferably include heating the ester-ammonium carboxylate under a blanket of inert gas, such as dry nitrogen gas, to prevent deleterious oxidation reactions. Such conditions further preferably include conducting the imidization reaction at about atmospheric pressure. Reduced pressures have been found in some cases to result in losses of volatile diamines.

The process of this invention is generally applicable to the preparation of thermoplastic polyimides, and is particularly suited to the preparation of high temperature thermoplastic polyimides whose preparation by melt polymerization techniques may pose difficulties. Such high temperature polyimides include crystalline or semi-crystalline polymers prepared from dianhydrides and diamines having substantially linear, rigid structures. Examples of such dianhydrides are pyromellitic dianhydride, 4,4′-bis(dicarboxyphenoxy)biphenyl, 4,4′-bis(dicarboxyphenyl)diphenylether, and the like. Examples of diamines that may be used to increase temperature and chemical resistance of polyimides include 4,4′-diaminodiphenyl ether, 4,4′-diaminobenzophenones and the like. Because of the high processing temperatures of polyimides derived from these types of dianhydrides and diamines, they have presented difficulties in their manufacture by melt polymerization procedures. In particular, the high processing temperatures make it difficult to control stoichiometries because of loss of reactants through volatilization.

The present invention is further illustrated by the following examples which are not intended to be limiting.

Example 1

Into a dry 2 liter four-necked flask equipped with a nitrogen inlet, addition funnel and mechanical were added 1000 ml of dry methanol and 520.5 grams (1.00 moles) 2,2-bis(3,4-dicarboxyphenoxyphenyl) propane dianhydride ("BPA-DA"). The mixture was stirred and cooled in an ice bath. Through the addition funnel, 119 grams (2.2 moles) sodium methoxide as a 25% solution in methanol were slowly added to the cooled mixture. After the addition was complete the mixture was allowed to warm to ambient temperature. The mixture was then acidified with 211 grams of acetic acid. About 700 ml of methanol were removed under vacuum. The remaining material was transferred to a 12 liter separatory funnel where it was mixed with 2000 ml methylene chloride and 5000 ml water. The organic layer was washed three times with water. Evaporation of the methylene chloride yielded 530 grams of material.

The product exhibited a molecular weight (determined by titration) of 580. (Calculated molecular weight is 584.55.) High pressure liquid chromatography showed the absence of BPA-DA and a relative purity of greater than 98%. FTIR was consistent with the dimethyl ester of BPA-DA. The melting point was 92-97°C.

Example 2

Into a dry 1000 ml flask were added 100 grams (0.192 moles) BPA-DA and 400 ml of dry methanol. The slurry was refluxed for six hours after which time the BPA-DA was in solution. Removal of the methanol yielded 110 grams of product.

Analysis showed the material to be the same as that prepared in Example 1.

Example 3

Into a dry 500 ml flask were added 70 grams (0.135 moles) BPA-DA and 100 ml of dry methanol. The slurry was heated to reflux until all of the solids reacted and dissolved (about 6 hours). To the cooled solution was added 14.60 grams (0.135 moles) of meta-phenylene diamine. After the diamine dissolved the methanol was removed on a roto-evaporator. The resultant solid had an intrinsic viscosity of 0.11 dl/g in phenol/1,1,2,2-tetrachloroethane ("TCE"). This solid was heated under nitrogen at 200°C. After six hours the resultant polyetherimide had an intrinsic viscosity of 0.53 dl/g and a glass transition temperature of 214°C.

Example 4

Into a dry 500 ml flask were added 100 grams (0.192 moles) BPA-DA and 200 ml of dry methanol. The slurry was heated to reflux until all of the solids reacted and dissolved (about 7 hours). To the cooled solution were added 38.07 grams (0.192 moles) 4,4′-methylenedianiline. After the diamine dissolved, the methanol was removed by vacuum distillation on a rotary evaporator. The resultant solid had an intrinsic viscosity of 0.10 dl/g in phenol/TCE. This solid was heated under nitrogen at 190°C. After six hours the resultant polyetherimide had an intrinsic viscosity of 0.67 dl/g and a glass transition temperature of 210°C.

Example 5

Into a dry 500 ml flask were added 100 grams (0.192 moles) BPA-DA and 200 ml dry methanol. The slurry was heated to reflux until all of the solids reacted and dissolved (about 7 hours). To the cooled solution was added 38.44 grams (0.192 moles) 4,4′-oxydianiline. After the diamine dissolved the methanol was removed by vacuum distillation on a rotary evaporator. The resultant solid had an intrinsic viscosity of 0.09 dl/g in phenol/TCE. This solid was heated under nitrogen at 190°C. After six hours the resultant polyetherimide had an intrinsic viscosity of 0.59 dl/g and a glass transition temperature of 209°C.

Example 6

Into a dry 500 ml flask were added 90 grams (0.173 moles) BPA-DA and 200 ml of dry methanol. The slurry was heated to reflux until all of the solids reacted and dissolved (about 6.5 hours). To the cooled solution were added 18.70 grams (0.173 moles) para-phenylenediamine. After the diamine dissolved, the methanol was removed by vacuum distillation on a rotary evaporator. The resultant solid had an intrinsic viscosity of 0.10 dl/g in phenol/TCE. This solid was heated under nitrogen at 210°C. After six hours the resultant polyetherimide had an intrinsic viscosity of 0.66 dl/g and a glass transition temperature of 230°C.

Example 7

Into a dry 500 ml flask were added 50 grams (0.096 moles) BPA-DA and 100 ml of dry methanol. The slurry was heated to reflux until all of the solids reacted and dissolved (about 6.0 hours). To the cooled solution were added 23.85 grams (0.096 moles) 4,4'-sulfonyldianiline. After the diamine dissolved, the methanol was removed by vacuum distillation on a rotary evaporator. The resultant solid had an intrinsic viscosity of 0.10 dl/g in phenol/TCE. This solid was heated under nitrogen at 220°C. After six hours the resultant polyetheirmide had an intrinsic viscosity of 0.57 dl/g and a glass transition temperature of 249°C.

Example 8

Into a dry 500 ml flask were added 60.89 grams (0.117 moles) BPA-DA and 200 ml of dry methanol. The slurry was heated to reflux until all of the solids reacted and dissolved (about 6.0 hours). Pyromellitic anhydride (7.30 grams, 0.0335 moles) were then added, and the mixture was refluxed for an additional hour. To the cooled solution were added 16.27 grams (0.150 moles) of meta-phenylenediamine. After the diamine dissolved, the methanol was removed by vacuum distillation on a rotary evaporator. The resultant solid had an intrinsic viscosity of 0.12 dl/g in phenol/TCE. This solid was heated under nitrogen at 210°C. After six hours, the resultant polyetherimide had an intrinsic viscosity of 0.57 dl/g and a glass transition temperature of 235°C.

Example 9

Into a dry 500 ml flask were added 52.05 grams (0.100 moles) BPA-DA, 21.27 grams (0.066 moles) 4,4'-bis(3,4-dicarboxyphenoxy)benzophenonedianhydride and 200 ml of dry methahol. The slurry was heated to reflux until all of the solids reacted and dissolved (about 6.0 hours). To the cooled solution were added 17.95 grams (0.166 moles) meta-phenylenediamine. After the diamine dissolved, the methanol was removed by vacuum distillation on a rotary evaporator. The resultant solid had an intrinsic viscosity of 0.11 dl/g in phenol/TCE. This solid was heated under nitrogen at 210°C. After six hours, the resultant polyetherimide had an intrinsic viscosity of 0.51 dl/g and a glass transition temperature of 230°C.

Example 10

Into a dry 200 ml flask were added 9.00 grams (0.029 moles) of bis(3,4-dicarboxyphenyl)-etherdianhydride and 75 ml of methanol. The mixture was heated to reflux for 5 hours and then cooled. To the cooled solution were added 5.81 grams (0.029 moles) of 4,4'-oxydianiline. After the diamine dissolved, the methanol was removed by vacuum distillation on a rotary evaporator. The resultant solid had an intrinsic viscosity of 0.09 dlg in phenol/TCE. This solid was heated under nitrogen at 230°C. After six hours, the resultant polyetherimide had an intrinsic viscosity of 0.83 dl/g and a glass transition temperature of 265°C.

Example 11

A mixture of 50.00 , 0.1029 moles of 4,4'-bis(dicarboxyphenoxy)bisphenyldianhydride ("BP-DA") (BP-DA, 98.5% pure) and 75 ml anhydrous methanol were placed in an autoclave and heated for 40 minutes while stirring at 140°C, 120 psig. The reaction mixture was cooled to 25°C, then the excess methanol was removed by rotary evaporation at 90°C, 15 mm Hg to form the bis(1/2 acidmethylester) of BP-DA. Analytical characterization of this material indicated a melting point of 147±1°C., and a titration of 275.0 g/mole equivalent for R-$CO_2$H (theoretical = 275.4 g/mole equivalent).

Example 12

A mixture of 340.37 g, 0.701 moles of 4,4'-bis(dicarboxyphenoxy)bisphenyldianhydride and 8.65 g, 0.0584 moles of phthalic anhydride (for molecular weight control) and 0.06 g sodium phenylphosnate and anhydrous methanol, 450 ml were placed in an autoclave and heated for 40 minutes while stirring at 140°C., 120 psig. The reaction mixture was then cooled to 25°C. and 78 86 g, 0.730 moles of metaphenylenediamine were added. The mixture was strirred for five minutes. The reaction mixture was then placed in an oven under a nitrogen atmosphere and heated at 230-235°C. for 4 hours. A polymer was produced having a glass transition temperature of 244°C. and an intrinsic viscosity in a phenol/TCE (60/40, wt/wt), solution of 0.60 dl/g.

**Claims**

1. A process for making a polyimide having repeating units of the formula

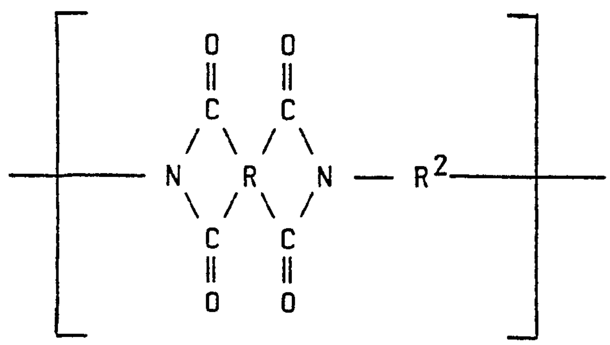

which comprises the steps of:

(a) reacting a dianhydride of the formula

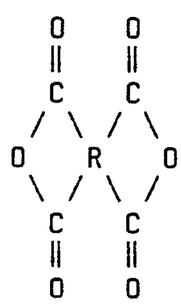

with a molar excess of a lower aliphatic alcohol of the formula

$R^1$-OH

under ester-forming conditions to form a diester-diacid of the formula

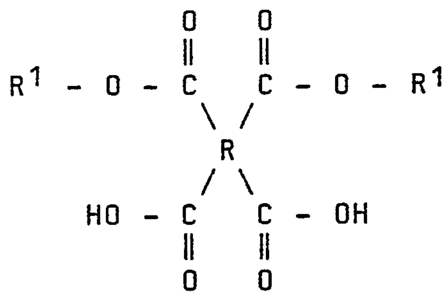

(b) combining the diester-diacid with an organic diamine of the formula

$H_2N - R^2 - NH_2$

to form an ester ammonium-carboxylate salt having repeating units of the formula

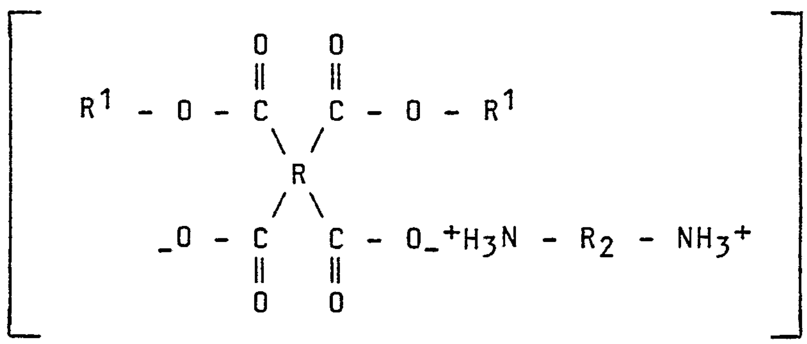

(c) isolating the ester-ammonium carboxylate salt as a solid; and

(d) heating the ester-ammonium carboxylate salt under polyimide-forming conditions to form the polyimide;

wherein R is a tetravalent aromatic radical selected from the group consisting of

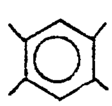 , 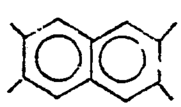 , 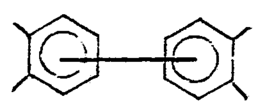 ,

and 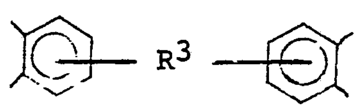

wherein $R^3$ is a member selected from the group consisting of -O-, -S-, -CO-, $-SO_2-$, $C_{(1-5)}$alkylene and halogenated derivatives thereof, including perfluroalkylene groups, and divalent radicals of the formula

-O - Z - O-

wherein Z is a member selected from the group consisting of (A) divalent organic radicals of the formula:

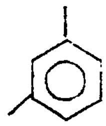

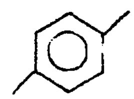

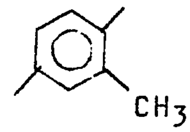

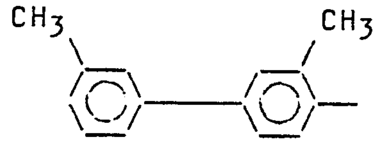

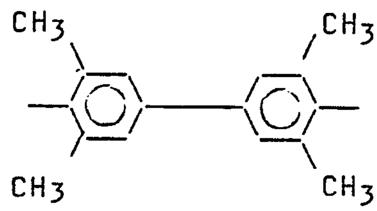

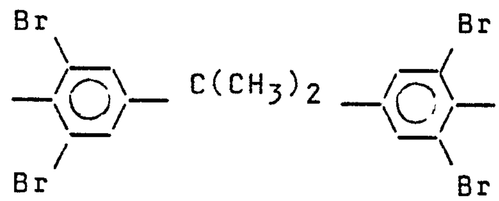

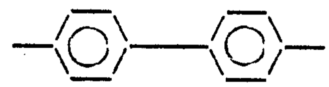

and

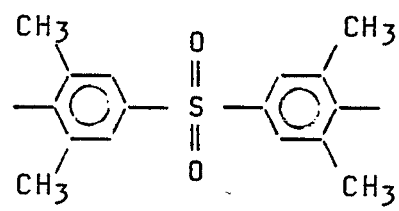

and (B) divalent organic radicals of the general formula

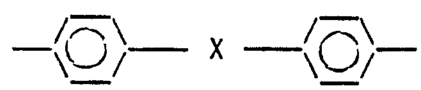

where X is a member selected from the group consisting of divalent radicals of the formula -O-, -S-, -CO-, $-SO_2-$, $C_{(1-5)}$ alkylene and halogenated derivatives thereof, including perfluroalkylene groups; $R^1$ is a lower alkyl group of from 1 to about 10 carbon atoms; and $R^2$ is a divalent organic radical selected from the group consisting of (a) aromatic hydrocarbon radicals having from 6 to about 20 carbon atoms and halogenated derivatives thereof, (b) alkylene radicals having from 2 to about 20 carbon atoms, cycloalkylene radicals having from 3 to about 20 carbon atoms, (c) from $C_2$ to about $C_8$ alkylene terminated polydiorganosiloxane, and (d) divalent radicals of the general formula

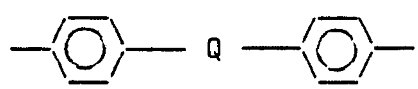

where Q is a member selected from the group consisting of:

$$-S-,\quad -O-,\quad -\overset{\overset{O}{\|}}{C}-,\quad -\underset{\underset{O}{\|}}{\overset{\overset{O}{\|}}{S}}-,\quad \text{and}\quad -C_zH_{2z}-,$$

and z is an integer from 1 to about 5.

2. The process of claim 1, wherein R is a tetravalent aromatic radical of the formula,

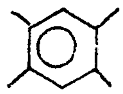 , 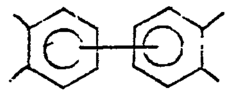 , 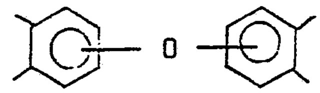

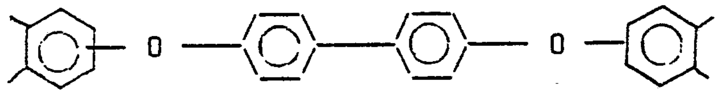 ,

or

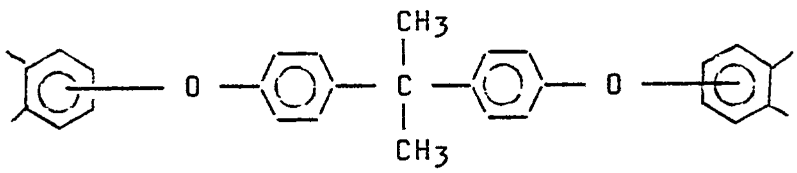

3. The process of claim 1, wherein $R^1$ is lower alkyl of from 1 to about 5 carbon atoms.

4. The process of claim 1, wherein $R^2$ is a member selected from the group consisting of o-phenylenediamine, m-phenylenediamine and p-phenylenediamine.

5. The process of claim 1, wherein the aromatic dianhydride has the formula

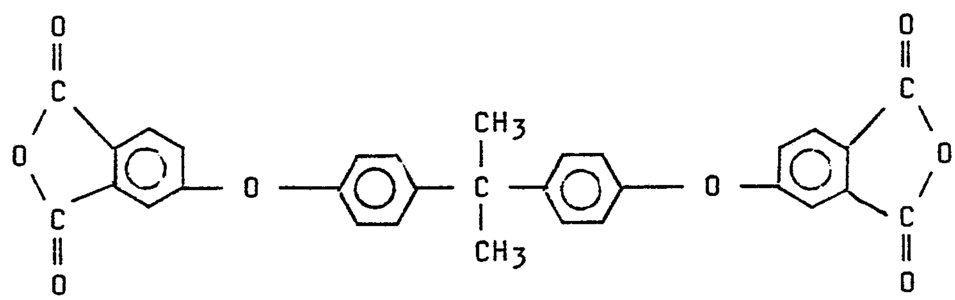

6. The process of claim 1, wherein the aromatic dianhydride has the formula

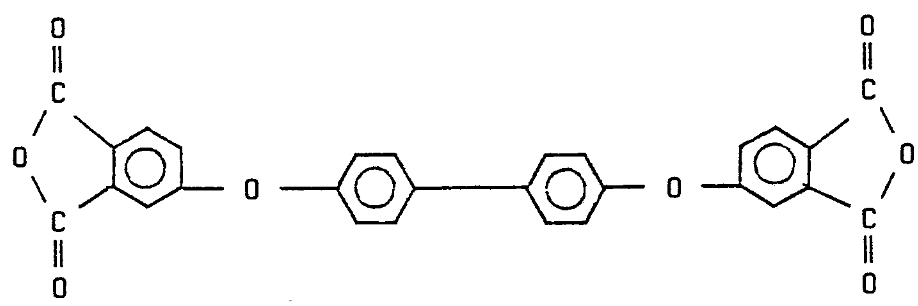

7. The process of claim 1, wherein the aromatic dianhydride has the formula

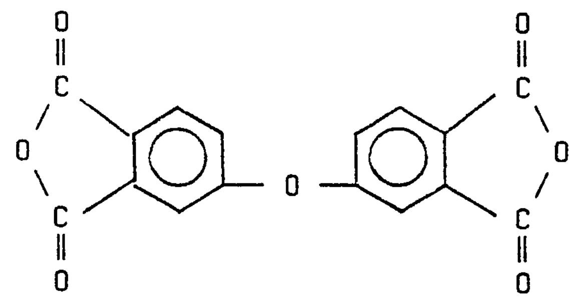

8. the process of claim 1, wherein the aromatic dianhydride has the formula

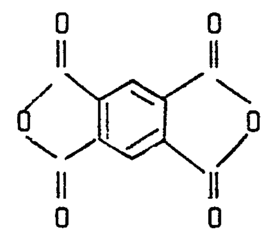

9. The process of claim 1, wherein the aromatic dianhydride has the formula

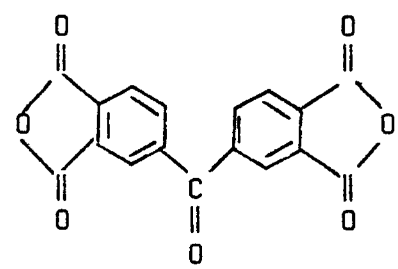

10. The process of claim 1, wherein a mixture of two or more dianhydrides is employed in step (a).

11. The process of claim 1, 2, 3, or 4, wherein the ester-forming conditions of step (a) include substantially anhydrous conditions and a temperature from about 50°C to about 120°C.

12. The process of claim 11, wherein the molar ratio of lower aliphatic alcohol to aromatic dianhydride is at least about 2:1 and the ester-forming conditions include a reaction temperature of from about 65°C to about 150°C.

13. The process of claim 12, wherein the lower aliphatic alcohol is methanol.

14. The process of claim 1, 2, 3 and 4, wherein the polyimide-forming conditions in step (d) include a temperature of from about 150°C to about 350°C.

15. The process of claim 14, wherein the polyimide-forming conditions in step (d) include a temperature of from about 150°C up to about the glass transistion temperature of the polyimide being formed.

16. A compound of the formula

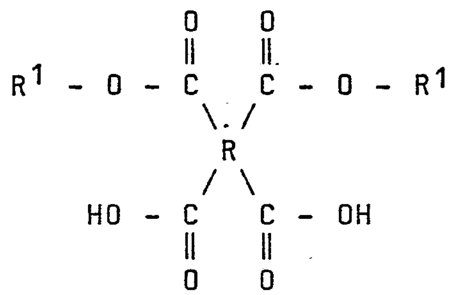

wherein R is a tetravalent aromatic radical selected from the group consisting of

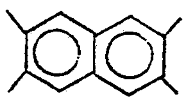 , 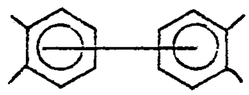 , and 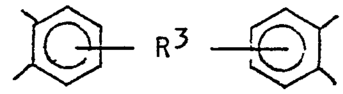

wherein $R^3$ is a member selected from the -O-, -S-, $-SO_2-$, and $C_{(1-5)}$alkylene and halogenated derivatives thereof, including perfluororalkylene groups, and divalent radicals of the formula -O - Z - O -
wherein Z is a member selected from the group consisting of (A) divalent organic radicals of the formula:

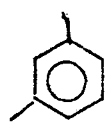

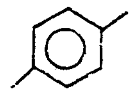

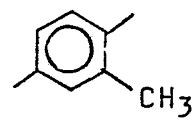

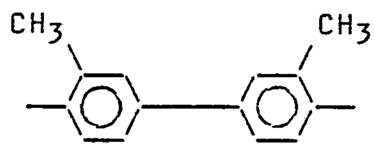

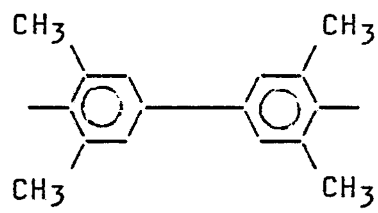

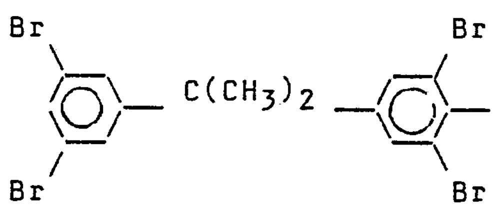

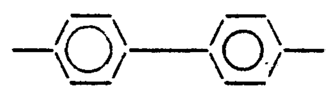

and

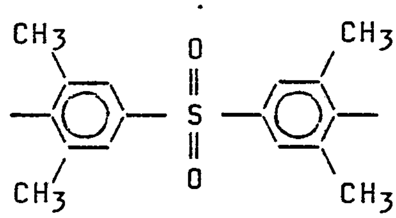

and (B) divalent organic radicals of the general formula

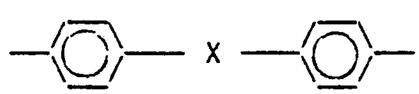

where X is a member selected from the group consisting of -O-, -S-, -CO-, $-SO_2-$, $C_{(1-5)}$ alkylene and halogenated derivatives thereof, including perfluoroalkylene groups; and $R^1$ is a lower alkyl group of from 1 to about 10 carbon atoms.

14. The compound of claim 13, wherein R is a tetravalent aromatic radical of the formula,

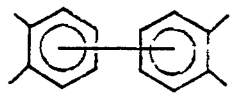 , 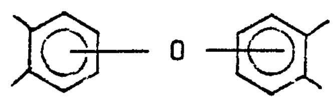

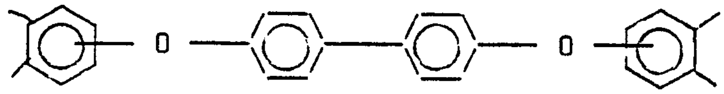 ,

and

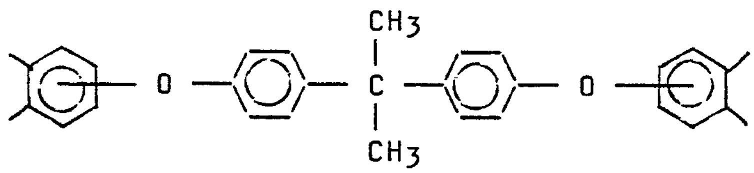

15. The compound of claim 13, wherein $R^1$ is lower alkyl of from 1 to about 5 carbon atoms.

16. The compound of claim 13, having the formula

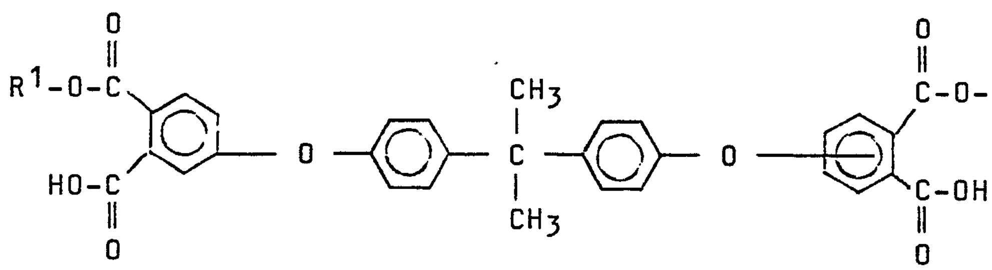

17. The compound of claim 13, having the formula

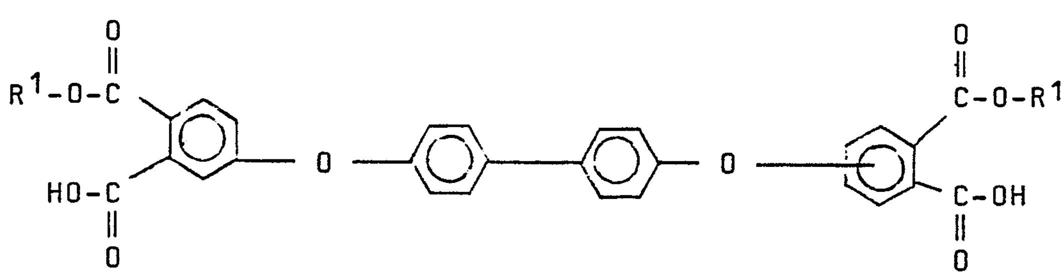

18. The compound of claim 13, having formula

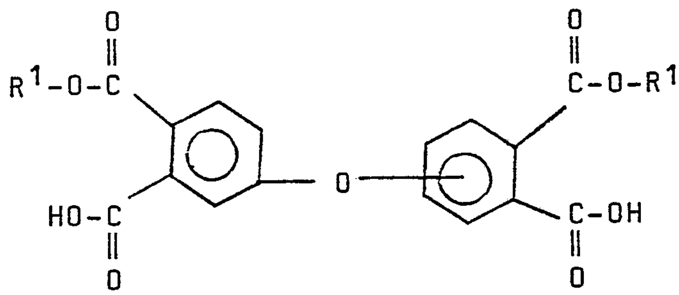

19. The compound of claim 13, 16, 17 or 18 wherein $R^1$ is methyl.